# EUROPEAN PATENT APPLICATION

(11) **EP 1 484 806 A1**
(43) Date of publication of application: **08.12.2004**
(21) Application number: 04253227.5
(22) Date of filing: 28.05.2004
(51) Int. Cl.: H01M 2/08, H01M 8/02

(54) **A structurally yieldable fuel cell seal material**

(30) Priority: 03.06.2003 US 454100
(71) Applicant: Hewlett-Packard Development Company, L.P., Houston, Texas 77070 (US)
(72) Inventor: Beatty, Christopher, Albany, OR 97321 (US); Field, Marshall, Corvallis, OR 97330 (US); Champion, David, Lebanon, OR 97355 (US)
(74) Representative: Tollett, Ian

(57) **Abstract**

A seal (360,760) for a fuel cell includes an alloy configured to absorb thermal and redox stresses transferred to the fuel cell by becoming structurally yieldable at operating temperatures of the fuel cell.

## Description

The present invention relates to a seal for a fuel cell, the fuel cell itself, an electronic device and to methods associated with the seal.

During the past several years, the popularity and viability of fuel cells for producing both large and small amounts of electricity has increased significantly. Fuel cells conduct an electrochemical reaction between chemicals such as hydrogen and oxygen to produce electricity and heat. Fuel cells are similar to batteries in that they are electrochemical in nature, but will continue to operate as long as they have fuel. Moreover, fuel cells are much cleaner than devices that combust hydrocarbons.

Fuel cells provide a direct current (DC) voltage that may be used to power motors, lights, computers, or any number of electrical appliances. While there are several different types of fuel cells, each using a different chemistry, most all fuel cells have three component parts: an anode, a cathode, and an electrolyte. Fuel cells are usually classified, depending on the type of electrolyte used, into one of five groups: proton exchange membrane (PEM) fuel cells, alkaline fuel cells (AFC), phosphoric-acid fuel cells (PAFC), solid oxide fuel cells (SOFC), and molten carbonate fuel cells (MCFC).

While all fuel cells have some desirable features, solid oxide fuel cells (SOFC) have a number of distinct advantages over other fuel cell types. Some advantages of SOFCs include reduced problems with electrolyte management, increased efficiencies over other fuel cells (up to 60% efficient), the potential for co-generation with heat byproducts, higher tolerance to fuel impurities, and the internal reforming of hydrocarbon fuels (for the production of hydrogen and methane) is possible.

Most SOFCs include an electrolyte made of a solid-state material such as a fast oxygen ion conducting ceramic. On each side of the electrolyte is an electrode; an anode on one side and a cathode on the other. An oxidant such as air is fed to the cathode, which supplies oxygen ions to the electrolyte. A fuel such as hydrogen or methane is fed to the anode where it is transported to the electrolyte to react with the oxygen ions. This reaction produces electrons, which are then introduced into an external circuit as useful power. In order to produce a useable amount of power and to increase efficiency, SOFC fuel cells are typically stacked on top of one another forming an SOFC stack.

Recent developments in SOFC technology have reduced the operating temperature of SOFC fuel cells from around 1000°C to a range of 600-800 degrees Celsius. This reduction in operating temperatures has permitted the structural housings of SOFCs to be constructed of less expensive materials such as stainless steels. While the use of less expensive materials is of great advantage to fuel cell development and production costs, less expensive materials also present a number of additional issues.

Throughout the function of SOFCs, a cell is often cycled between room temperature and a full operating temperature a number of times. This thermal cycle causes the housing materials to contract and expand according to their thermal coefficients of expansion (TCE). This expansion and contraction introduce thermal stresses that may be transferred through traditionally rigid seals and other structural components directly to the ceramic cell. These thermal stresses effectively reduce the service life of SOFCs by compromising the seals or breaking the structurally brittle ceramic cells.

A seal for a fuel cell includes an alloy configured to absorb thermal and redox stresses transferred to the fuel cell by becoming structurally yieldable at operating temperatures of the fuel cell.

The accompanying drawings illustrated various preferred embodiments of the present invention and are a part of the specification. The illustrated embodiments are merely examples of the present invention and do not limited the scope thereof.

**Fig. 1A** illustrates a bottom view of a solid oxide fuel cell (SOFC) housing according to one exemplary embodiment.

**Fig. 1B** is a top planar view of a SOFC housing according to one exemplary embodiment.

**Fig. 2** is a top planar view of an insulating plate according to one exemplary embodiment.

**Fig. 3** is cross-sectional view illustrating a low melting point composite seal disposed in an assembled SOFC housing according to one exemplary embodiment.

**Fig. 4** is a cross-sectional view of a SOFC stack that implements a low melting point composite seal according to one exemplary embodiment.

**Fig. 5** is a flow chart illustrating a method for manufacturing a SOFC according to one exemplary embodiment.

**Fig. 6** is a flow chart illustrating the operation of a SOFC according to one exemplary embodiment.

**Fig. 7A** illustrates the structure of a SOFC housing according to an exemplary alternative embodiment.

**Fig. 7B** illustrates a SOFC fuel stack incorporating the exemplary alternative embodiment illustrated in Fig. 7A.

**Figs. 8A and B** illustrate a SOFC incorporating a low melting point composite seal according to an alternative embodiment.

Throughout the drawings, identical reference numbers designate similar, but not necessarily identical, elements.

An apparatus for reducing the transfer of thermal stresses caused by thermal or redox contractions and expansions to a solid oxide fuel cell (SOFC) from the housing of the SOFC is described herein. According to one exemplary implementation, described more fully below, a number of composite seals that are structurally yieldable at SOFC operating temperatures may be introduced between the fuel cell housing and the ceramic fuel cell. The present system will be described, for ease of explanation only, in the context of a solid oxide fuel cell (SOFC). However, the low melting point composite seals described herein may be used by many cyclically heated systems where the transfer of thermal stresses through a somewhat rigid seal may be a concern. The term "low melting point" is meant to be understood both here and in the appended claims as describing a material, either an alloy or a composite, which looses structural integrity at the operating temperatures of the cyclically heated system.

In the following description, for purposes of explanation, numerous specific details are set forth in order to provide a thorough understanding of a number of preferred embodiments of the invention. It will be apparent, however, to one skilled in the art that the invention may be practices without these specific details. Reference in the specification to "one embodiment" or "an embodiment" means that a particular feature, structure, or characteristic described in connection with the embodiment is included in at least one embodiment. The appearance of the phrase "in one embodiment" in various places in the specification are not necessarily all referring to the same embodiment.

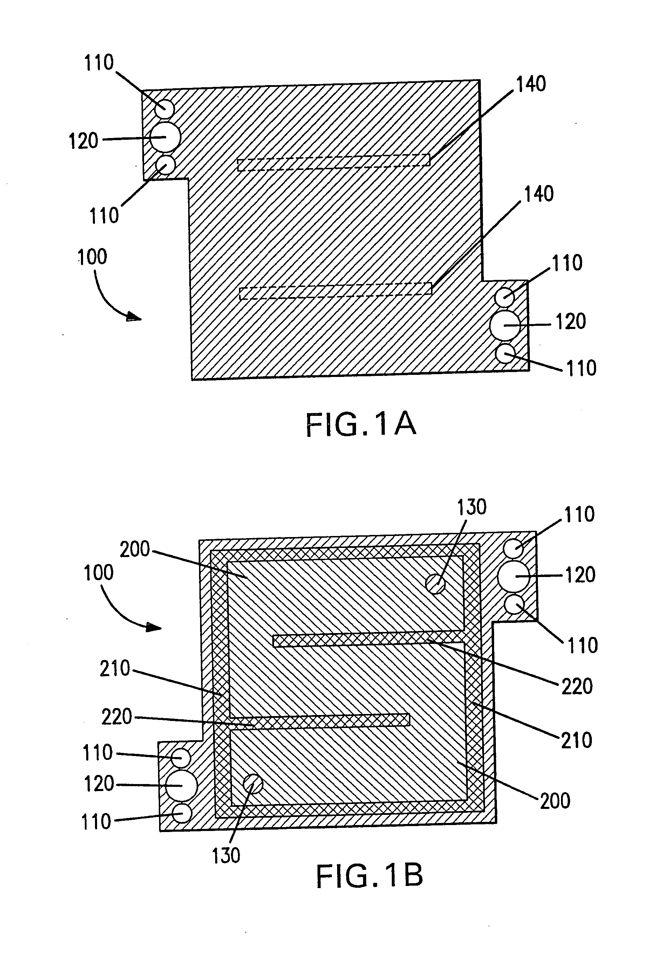

Figure 1A illustrates a bottom view of a solid oxide fuel cell (SOFC) housing according to one exemplary embodiment. As illustrated in Figure 1, the housing (100) has a main body portion including a plurality of stack securing orifices (110), a plurality of fuel feed throughs (120), and a plurality of air passage extrusions (140).

The body of the housing (100) illustrated in Figure 1A may be configured to be stackable on other similar housings thereby forming a SOFC stack. When stacked, the air passage extrusions (140) form a number of air passages directly above the cathode of the SOFC. The housing (100) provides structural support to a SOFC as well as acting as an electrical interconnect between housings in one exemplary embodiment. The housing (100) may be constructed of any material capable of providing structural support for a SOFC throughout its thermal cycle while acting as an electrical interconnect between housings including, but in no way limited to, doped lanthanum chromite for high temperature fuel cells and ferritic stainless steels for fuel cells with an operating temperature between 600 and 800 degrees Celsius. The following fuel cartridge will be described, for ease of explanation only, in the context of a housing made of a ferritic stainless steel. Moreover, the present low melting point composite seals are in no way limited to a planar configuration or a housing of any specific geometry.

The stack securing orifices (110) illustrated in Figure 1A are configured to receive a securing device (not shown) that aids in securing a first housing (100) to a second housing thereby forming a stack. As shown in Figure 1A, the stack securing orifice may be a hole capable of receiving a mechanical securing device such as a bolt or a pin. The stack securing orifices (110) illustrated in Figure 1A are shown having a circular cross section to facilitate the reception of a cylindrical pin or a bolt, however, the stack securing orifices may be any cross-section necessary to receive a stack securing device.

The fuel feed through (120) illustrated in Figure 1A is a fluidly sealed orifice that extends through the SOFC housing (100) and may be coupled to a fuel feed through (120) of any subsequent housing (100) when the housings (100) are coupled to form a SOFC stack. The fuel feed through is configured to contain and distribute pressurized fuel between housings (100) so that the fuel may be supplied to the anodes that form a part of the SOFCs in a SOFC fuel stack.

Figure 1 B illustrates a top view of a SOFC housing (100) illustrating some additional components of an exemplary embodiment. As shown in Figure 1B, the top of the SOFC housing (100) further includes a stepped geometry including fuel channels (200) defined by channel extrusions (220), fuel manifolds (130) disposed in the fuel channels, and a fuel cell supporting shelf (210).

The fuel manifolds (130) disposed in the fuel channels (200) are fluidically coupled to the fuel feed through (120). The fuel manifolds (130) may be configured to direct fuel supplied by the fuel feed through (120) into the fuel channels (200) where the fuel may come into contact with the SOFC.

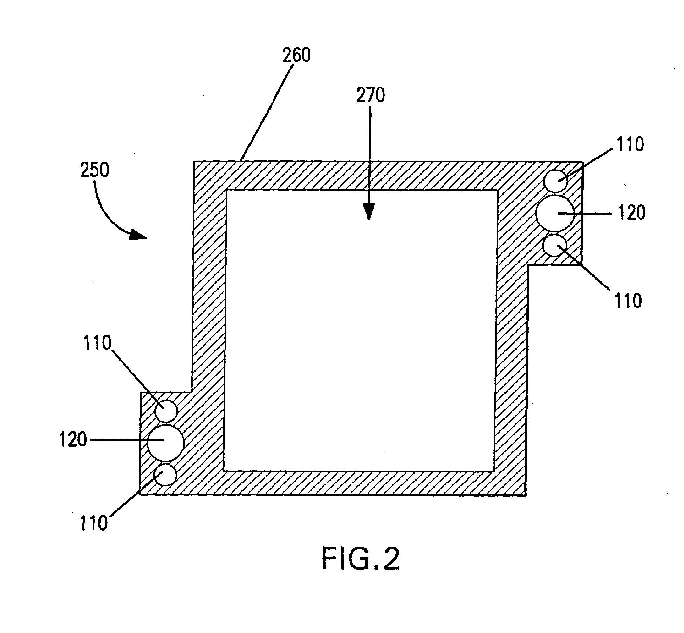

Figure 2 illustrates an insulating plate (250) that may be incorporated into a fuel cell housing according to one exemplary embodiment. As shown in Figure 2, the insulating plate (250) includes a body (260), a center orifice (270), stack securing orifices (110), and fuel feed throughs (120).

The body (260) of the insulating plate (250) is configured to be disposed between two housings (100; Fig. 1A) in a stack configuration or between a housing and a top plate. The body of the insulating plate (250) prevents the completion of a circuit that may short out the SOFC. The body of the insulating plate may be composed of any material capable of providing an insulated barrier between two housings or a housing and a top plate throughout the operating cycle of an SOFC including, but in no way limited to, a ceramic material.

The center orifice (270) of the insulating plate (250) is configured to receive the air passage extrusions of a SOFC housing (140; Fig. 1A) that may also act as interconnects between fuel cells in a stacked configuration. As shown in Figure 2, the center orifice may be configured such that when assembled, the air passage extrusions (140; Fig 1A) may extrude through the center orifice and be communicatively coupled to the cathode side of a SOFC.

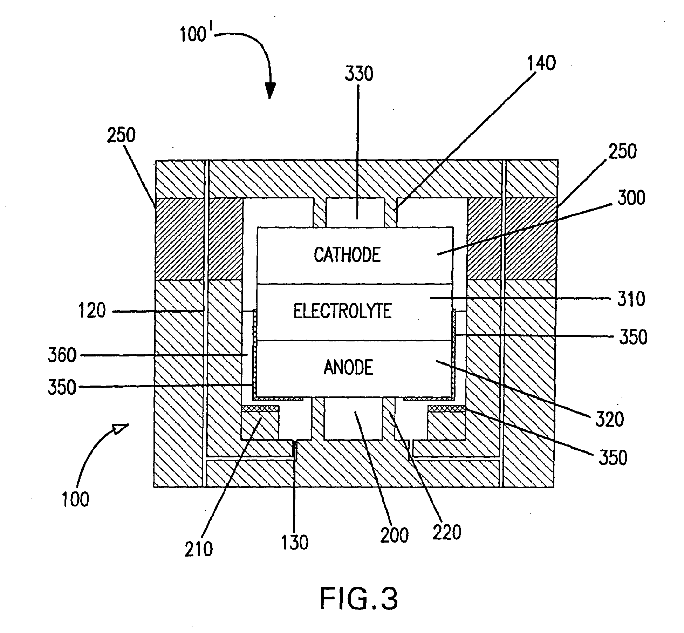

Figure 3 is an exploded cross-sectional view of an assembled exemplary SOFC system. As illustrated in Figure 3, an assembled SOFC system includes a SOFC housing (100) with a number of fuel feed throughs (120) and a fuel manifold (130) coupled to each fuel feed through (120). The fuel manifolds (130) are configured such that they are fluidly coupled to the fuel channels (200). Seated on top of the fuel channel extrusions (220) and the fuel cell supporting shelves (210) is a SOFC including a cathode (300), an anode (320), and a center electrolyte (310). Disposed between the SOFC housing (100) and the top plate or subsequent housing (100') is an insulating plate (250).

The cathode (300) of the SOFC illustrated in Figure 3 may be any cathode capable of converting oxygen or air and electrons into oxygen ions including, but in no way limited to a mixed conducting perovskite such as lanthanum manganate (LaMnO₃). The anode (320) illustrated in Figure 3 may be any anode capable of releasing electrons to an external circuit when a fuel such as hydrogen or methane is received and reacts with the oxygen ions. The materials used to form the anode (320) may include, but are in no way limited to, a ceramic/metal composite such as an electronically conducting nickel/yttria-stabilized zirconia cermet. The electrolyte (310) illustrated in Figure 3 may be any oxygen ion conducting electrolyte including, but in no way limited to, zirconia-based electrolytes such as yttria-stabilised zirconia, gadolinium-doped cerium-dioxide, Ba₂ln₂O₅, or a (strontium, magnesium)-doped LaGaO₃ (LSGM).

As shown in Figure 3, the SOFC is not directly seated on the fuel cell supporting shelves (210). Rather, the SOFC and the fuel cell supporting shelves (210) are separated by a low melting point composite seal (360) and an optional adherent wettable material (350). The adherent wettable material (350) may be positioned, if needed, between the low melting point composite seal (360), the fuel cell supporting shelves (210), and the SOFC as illustrated in Figure 3. The adherent wettable material (350) is configured to provide a stable chemical interface that may act as an adherent seal between the low melting point composite seal (360) and any adjoining components during the operation of the SOFC such as the ceramic components of the SOFC. The adherent wettable material (350) may be any material capable of wetting the ceramic surface of a SOFC and or housing thereby providing an adherent surface for a low melting point composite seal (360) including, but in no way limited to, a molybdenum manganese alloy (Mo/Mn), silver (Ag), gold (Au), platinum (Pt), nickel (Ni), tin (Sn), or any appropriate combination thereof.

The low melting point composite seal (360), according to the exemplary embodiment illustrated in Figure 3, is placed such that the low melting point composite seal (360) occupies the gap created between a properly seated SOFC and the inner wall of the SOFC housing (100). By occupying the above-mentioned gap, the low melting point composite seal may prevent the permeation of gas from the fuel channels (200) into the cathode area. The low melting point composite seal (360) may be any composite or alloy capable of providing a gaseous seal at typical operating temperatures of an SOFC by being at or near its melting point including, but in no way limited to, silver (Ag), tin (Sn), aluminum (Al), gold (Au), copper (Cu), or any appropriate combination thereof. For ease of explanation only, the following low melting alloy seal (360) will be described in the context of a silver alloy composite seal.

If silver (or any other low melting temperature metal with a relatively low vapor pressure) is the principle element used to form the low melting point composite seal (360), there are essentially two modalities that may occur: an electrically conductive seal or a non-electrically conductive seal. If silver is the dominant element in the seal, the low melting point composite seal will be electrically conductive. At SOFC operating temperatures, the silver will form a network that fuses together. This network may conduct electricity and the low melting point composite seal may act as an electrical interconnect between SOFC housings. If, however, the dominant element in the composite forming the low melting point composite seal (360) is a low melting point glass such as borosilicate aluminate glass, the seal will be non-electrically conductive. According to this embodiment, when the SOFC system reaches operating temperature, the borosilicate aluminate glass or other ceramic will coalesce and form a non-conductive network. When a non-electrically conductive seal is used, a separate apparatus may be used to provide the electrical interconnect between housings.

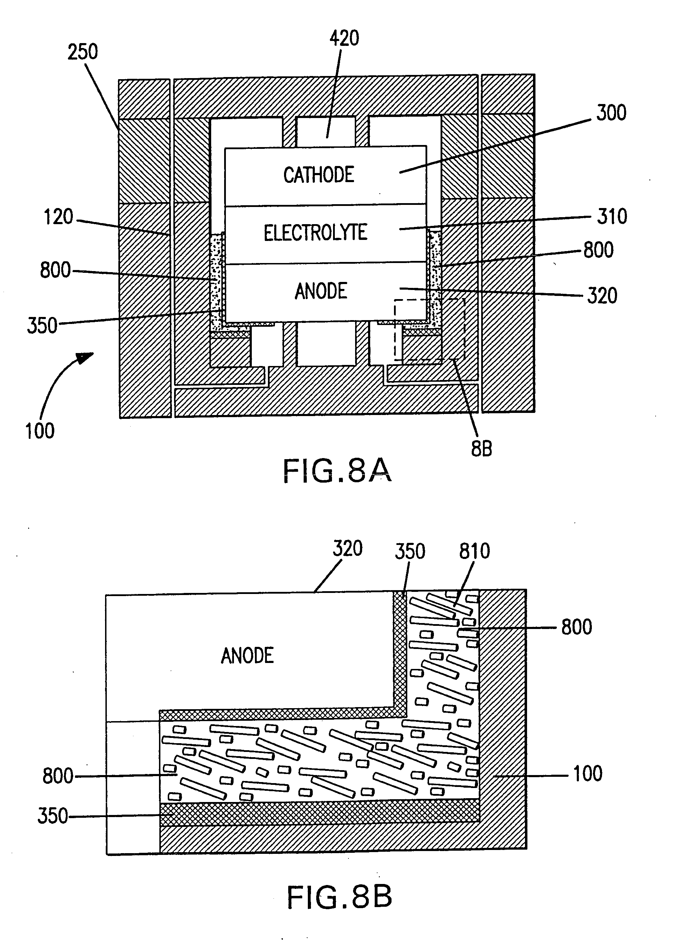

The low melting composite seal (360) may also include any number of particles, fibers, rods, spheres or other forms of "filler material." This "filler material" may be incorporated in the low melting point composite seal (360) in order to more closely match the thermal coefficient of expansion (TCE) of the seal with the TCE of the fuel cell housing (100) or other materials that may be surrounding the fuel cell. Moreover, the "filler material" may also provide additional surface tension to keep the seal in place when the SOFC operates above the melting point temperature of the low melting point composite seal (360). The "filler material" may be any number of conductive or insulating materials including, but in no way limited to, tungsten (W), molybdenum (Mo), zirconium di-oxide (ZrO2), or magnesium oxide (MgO). A low melting point composite seal (360) including "filler material" will be described in more detail below with reference to Figures 8A and 8B.

Positioned on top of the SOFC and the SOFC housing (100) is the bottom of a second housing or a top plate (100') that may include air passage extrusions (140) that form an air passage (330). The bottom of the second housing or top plate (100') may be coupled to the first housing (100) such that the fuel feed throughs (120) are aligned with one another and the air passage extrusions (140) are electrically coupled to the cathode (300) of the SOFC. With the air passage extrusions (140) electrically coupled to the cathode (300), the air passage extrusions may be configured to act as electrical interconnects between stacked housings (100).

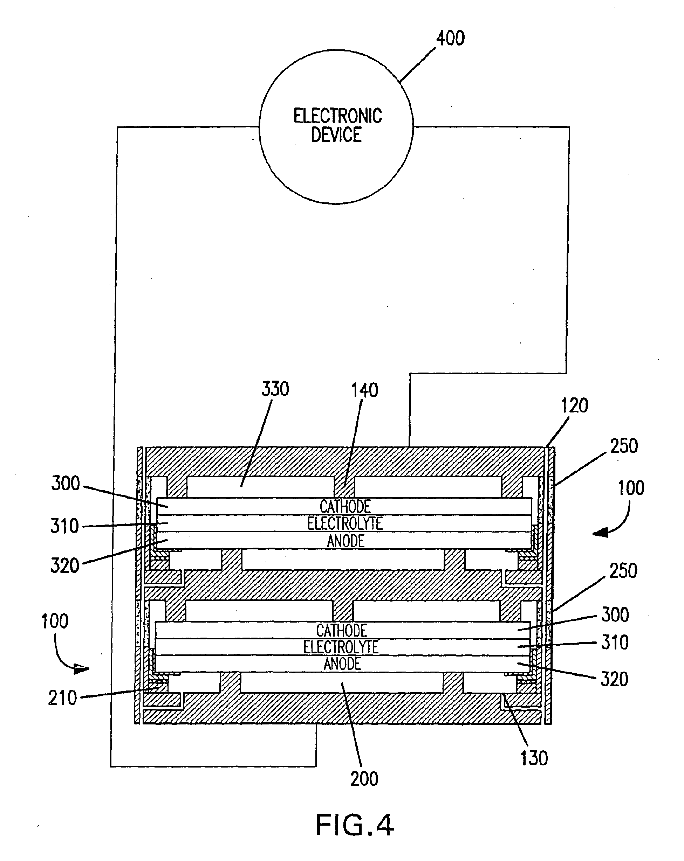

Figure 4 is a cross-sectional view illustrating an assembled SOFC stack configured to provide usable power to an electronic device according to one exemplary embodiment. As shown in Figure 4, a number of exemplary fuel cartridges (100) may be stacked on top of one another such that the fuel feed throughs (120) are fluidly coupled.

According to the configuration illustrated in Figure 4, the fuel feed throughs (120) may be charged by a single pressurized fuel source (not shown) and provide fuel to all of the fuel manifolds (130; Fig. 1B) in the fuel stack. A number of air passage extrusions (140) may also be formed on the bottom surface of the coupled SOFC housings (100). When these SOFC housings (100) are coupled together, the air passage extrusions (140) define an air passage (330). An insulating plate (250) may be positioned between each of the SOFC housings (100) as illustrated in Figure 4. The electrically non-conductive insulating plates (250) prevent the SOFC from shorting out by insulating the connection between subsequent housings (100).

Figure 4 also illustrates a number of solid oxide fuel cells (SOFC) disposed within the SOFC housings (100). The SOFCs illustrated in Figure 4 include a cathode (300) on the air passage (330) side of the SOFC, an electrolyte (310) disposed between the anode and the cathode, and an anode (320) disposed on the fuel channel (200) side of the SOFC. The anodes and the cathodes may be communicatively coupled to an electronic device (400) as illustrated in Figure 4 thereby producing power. The electronic device (400) illustrated in Figure 4 may be any power consuming device such as, by way of example only, a lap top computer, a television, a motor, a light, etc.

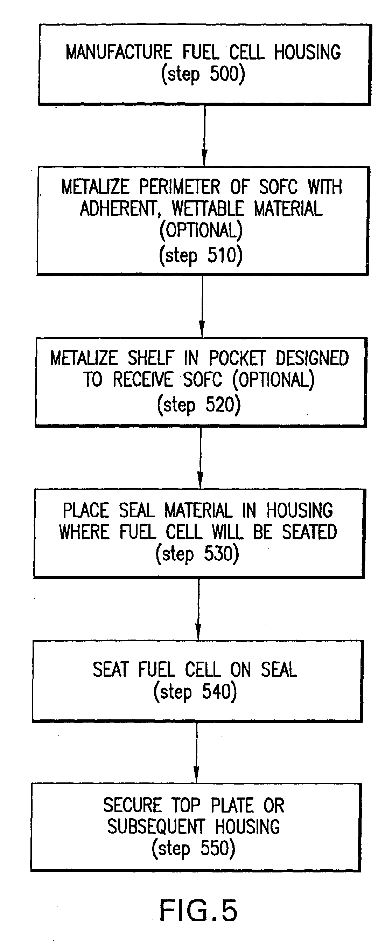

Figure 5 is a block diagram illustrating how the present low melting point composite seal may be manufactured and incorporated into a SOFC housing (100; Fig. 3) according to one exemplary embodiment. As illustrated in Figure 5, the manufacture and incorporation of the present low melting point composite seal includes manufacturing the fuel cell housing (step 500), optionally metalizing the perimeter of the SOFC with adherent, wettable material (step 510), optionally metalizing the fuel cell receiving shelf designed to receive the SOFC with an adherent, wettable material (step 520), placing the low melting point composite seal material in the housing where the fuel cell will be seated (step 530), seating the fuel cell on the low melting point composite seal (step 540), and securing the top plate or subsequent housing on the SOFC stack (step 550).

The initial step in manufacturing and implementing a low melting point composite seal according to the exemplary method illustrated in Figure 5 is manufacturing the fuel cell housing (step 500). The manufacture of the fuel cell housing (step 500) may be performed according any manufacturing method presently known or used in the art, including, but in no way limited to, casting, milling, forging, rolling, welding, plasma cutting, punching, etc. Moreover, the present low melting point composite seal may be incorporated into any fuel cell housing (100; Fig. 3) regardless of its configuration or method of manufacture.

Once the fuel cell housing has been manufactured, the perimeter of the SOFC (step 510) and the fuel cell receiving shelf (step 520) may be metalized with the adherent, wettable material. The metallization of the SOFC and the fuel cell receiving shelf are optional steps because the housing or SOFC may be wettable by the seal material without additional metalizing steps. The metallization may occur as a single manufacturing process or as independent processes. The adherent, wettable material (350; Fig. 3) mentioned above may be applied to the perimeter of the SOFC or the fuel cell receiving shelf (210; Fig. 3) according to any processing means configured to appropriately coat the above-mentioned components including, but in no way limited to, a brush application, a spray application, or a chemical deposition. Additionally, the adherent wettable material (350; Fig. 3) may be melted and then allowed to flow freely over the surface of the receiving components.

With the perimeter of the SOFC (step 510) and the fuel cell receiving shelf (step 520) metalized, the SOFC and its housing (100; Fig. 3) may be assembled. In order to assemble the SOFC and it's housing, a low melting point composite seal (360; Fig. 3) such as one previously described is positioned on the fuel cell supporting shelves (210; Fig. 3) where the SOFC will be seated (step 530). Once the low melting point composite material is securely in place, the SOFC may be seated in the housing on top of the low melting point composite material (step 540). The SOFC may be received in the low melting point composite seal in a pre-formed or machined seat or channel. Alternatively, the SOFC may simply be placed on top of the low melting point composite seal. Once the SOFC is received and securely coupled to the low melting point composite seal, the top plate or subsequent housing of the SOFC stack may be coupled to the SOFC housing (step 550). The top plate or subsequent housing may be coupled to the SOFC housing (100; Fig. 3) by a number of securing devices including, but in no way limited to, mechanical fasteners or adhesives. The top plate or subsequent housing, which may include fuel feed throughs (120; Fig. 3) and/or air passage extrusions (140; Fig. 3), may be coupled to the SOFC housing (100; Fig. 3) such that the fuel feed throughs (120; Fig. 3) of the SOFC housing (100; Fig. 3) are fluidly coupled to the fuel feed throughs of the top plate or subsequent housing. Additionally, the top plate or subsequent housing may be coupled to the SOFC housing such that the air passage extrusions are electrically coupled to the cathode (300; Fig. 3) of the SOFC. This configuration allows the air passage extrusions (140; Fig. 3) to act as electrical interconnects between housings. With the top plate or subsequent housing coupled to the SOFC housing, a SOFC stack may be formed.

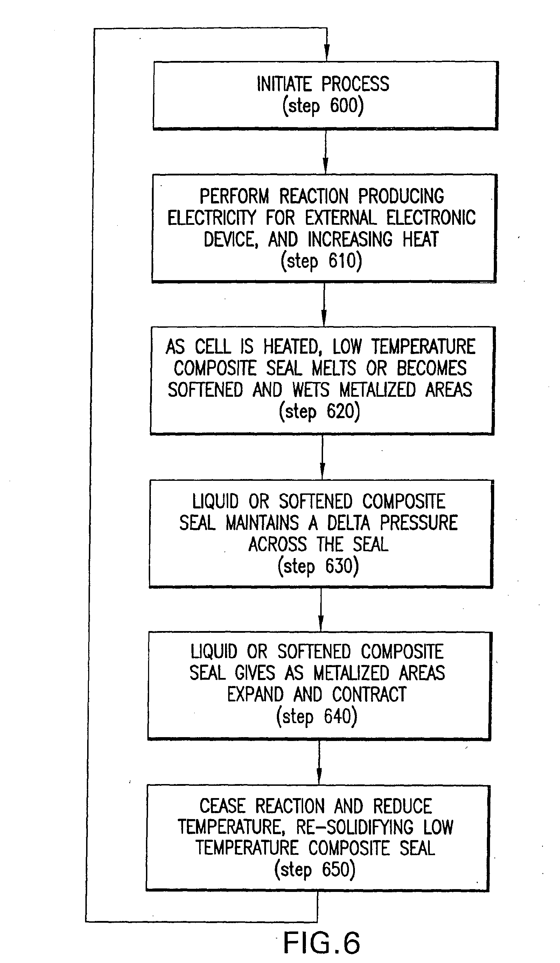

Figure 6 illustrates the operation of a low melting point composite seal throughout the operation cycle of the SOFC according to one exemplary embodiment. As illustrated in Figure 6, the process of converting fuel into electricity is initiated (step 600), the temperature of the housing is increased as a result of the reactions taking place (step 610), the low melting point composite seal becomes softened and wets the metalized areas (step 620), the softened composite maintains a delta pressure across the seal (step 630), and the softened composite gives as the metalized areas expand and contract (step 640). Once the cycle is completed, the apparatus is allowed to cool, causing the low melting point composite material to return to its previous physical location and state (step 650).

As noted above, the process of converting fuel into electricity using a SOFC is initiated (step 600) by providing hydrogen or methane fuel to the fuel channels (200; Fig. 3) and subsequently to the anode (320; Fig. 3) of the SOFC while air or forced oxygen is presented to the cathode passage (330; Fig. 3) and subsequently to the cathode (300; Fig. 3) region of the SOFC. As the above-mentioned air and fuel are presented to the respective parts of the SOFC, they are allowed to pass through the materials until they are presented at the electrolyte (310; Fig. 3). The electrolyte located between the anode and the cathode conducts oxygen ions from the cathode side to the anode side where they react with the fuel. Upon reacting with the hydrogen or methane fuel, water and electricity are produced. The electricity may then be transferred to an external circuit as useable electricity. Throughout the electricity producing process mentioned above, heat is produced as a result of the electrochemical process and the resistance inherent in the solid ceramic electrolyte (step 610).

Due to recent electrolyte forming methods, the heat generated by the above-mentioned process typically does not exceed a maximum value of 600 - 800°C. This operating temperature is either above or near the melting point temperature of the low melting composite seal such that the composite either melts or becomes softened (step 620) during operation. In its structurally yielding state, the low melting point composite wets the pre-metalized areas of the housing and SOFC. The low melting point composite seal, in its melted or softened state, forms a seal that maintains a delta pressure across the seal thereby maintaining the chemical integrity of the fuel cell system (step 630) by preventing the permeation of fuel away from the fuel channels (200; Fig. 3). The low melting point composite seal, in its melted or softened state, also yields in response to any pressures exerted on it such that that it may absorb thermal stresses transferred from a fuel cell housing. However, the low melting composite seal does not become structurally compromised to the point that it cannot maintain a sufficient seal to prevent the permeation of fuel from the fuel channels (200; Fig. 3).

Recent developments that have reduced the operating temperature of SOFCs to a range of around 600 - 800°C allow SOFC housings to be constructed of stainless steel and other materials that are less expensive than traditional materials. While the construction of the SOFC housings (100; Fig. 3) using stainless steels and other less expensive materials is advantageous in reducing the overall cost of SOFC stacks, these materials suffer from differing thermal conductivities and thermal coefficients of expansion (TCE). As a result, non-uniform thermal expansions often occur when the housings are placed in stack configurations. Non-uniform thermal expansion of the SOFC housings may produce thermal stresses. These thermal stresses have traditionally been transferred from the housings, through rigid seals, and onto the SOFCs. The transfer of thermal stresses reduces the operating life of the SOFC systems by either causing failure in the SOFC, failure in the rigid seals, or both. However, when thermal stresses caused by the expansion and contraction of the metalized areas are transferred to the present low melting point composite seal, the liquid or softened alloy of the low melting point composite seal yields in response to the thermal stresses (step 640). By yielding in response to thermal stresses, the present low melting point composite seal prevents the transfer of the thermal stresses from the SOFC housing to the somewhat brittle SOFC. This yielding in response to thermal stresses continues until the reaction cycle ceases and the operating temperature of the SOFC housing is reduced to its original temperature (step 650). As the temperature is decreased, the low melting point composite material re-solidifies into its original position and structure.

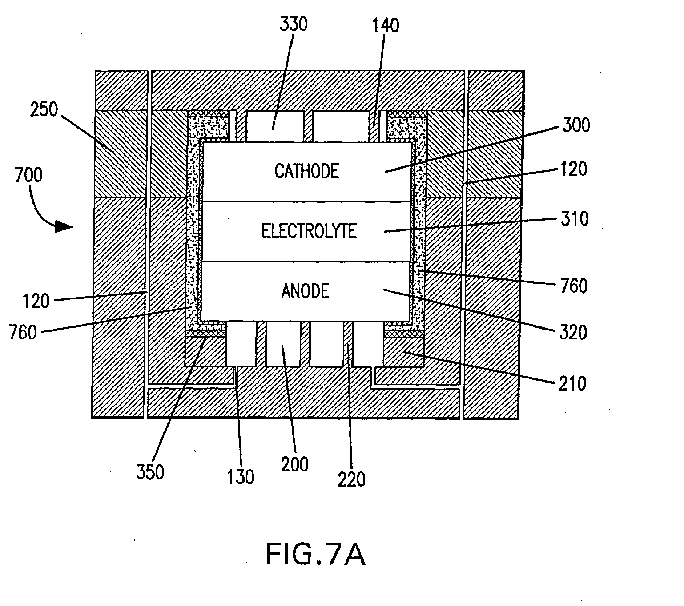

According to one alternative embodiment, illustrated in Figure 7A, the incorporation of an insulating low melting point composite seal (760) may increase the robustness of the low melting composite seal used. As shown in Figure 7A, the alternative configuration incorporating an insulating low melting point composite seal includes an insulating plate (250) and a housing (700) containing fuel feed throughs (120), fuel manifolds (130), fuel cell supporting shelves (210), and fuel channels (200) defined by fuel channel extrusions (220) similar to the housing illustrated in Figure 4. However, the alternative exemplary embodiment illustrated in Figure 7A further incorporates an insulating low melting point composite seal (760) and optional adherent wettable material (350). The insulating low melting point composite seal (760) shown in Figure 7A may occupy the entire gap created between the SOFC and the inner housing wall as illustrated in Figure 7A. The larger, more robust seal size may be incorporated because the insulating properties of the insulating low melting point composite seal (760) eliminate the risk of a short between the SOFC layers. An SOFC including a cathode layer (300), an electrolyte layer (310), and an anode layer (320) may be disposed in the insulating low melting point composite seal as illustrated in Figure 7A. A plurality of air passage extrusions (140) or other secondary structures may be disposed on the cathode side of the SOFC to serve as interconnects between SOFCs.

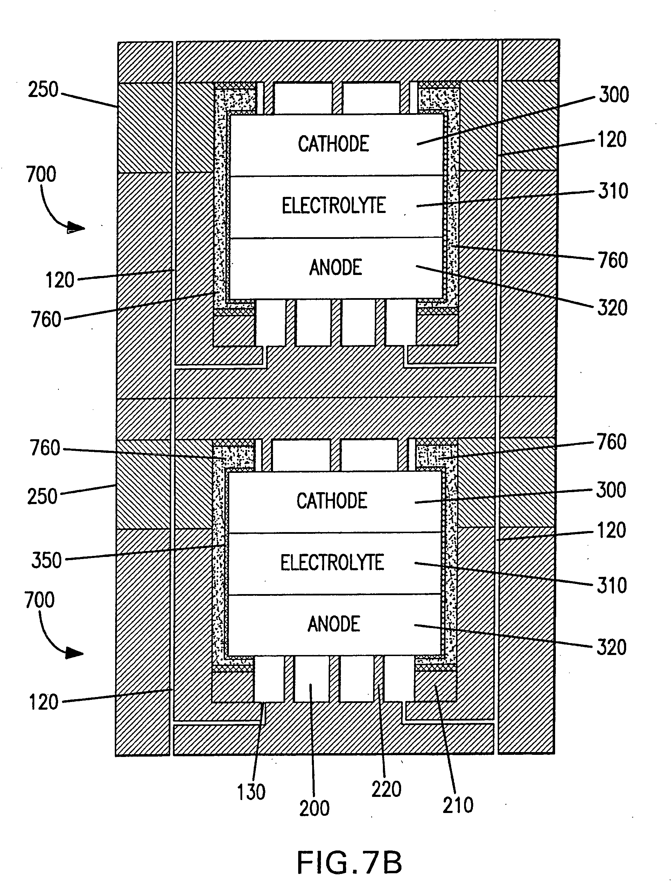

Figure 7B illustrates an SOFC stack implementing the insulating low melting point composite seal (760) illustrated in Figure 7A. As illustrated in Figure 7B, two housings (700) may be coupled to form a stack by fluidly coupling the fuel feed throughs (120) forming one continuous lumen. As shown in Figure 7B, the insulating low melting point composite seal (760) is formed around the entire SOFC such that the anode (320) and cathode (300) are not likely to short out the fuel stack.

When the SOFC system illustrated in Figure 7B performs its energy producing cycle, the system begins to heat up and both uneven thermal and redox expansions and contractions take place producing internal stresses in the system. The increase in system temperature may also structurally compromise the insulating low melting point composite seal (760) to the point that it will yield in response to stresses. The thermal and redox expansions and contractions produced by the system may then be absorbed throughout the thermal cycle of the system by the structurally yielding insulating low melting point composite seals (760). The more robust insulating low melting point composite seals (760) also cling to more surface area of the active SOFC reducing the possibility of fuel cell blow out due to high pressures. The incorporation of the present low melting point composite seal into the configurations of Figures 7A and 7B further illustrates that the present low melting point composite seal may reduce thermal stresses in any SOFC stack regardless of the housing configuration.

Figures 8A and 88 illustrate yet another alternative embodiment of the present low melting point composite seal. The SOFC system configuration illustrated in Figure 8A is similar to that of Figure 3, except that the low melting point composite seal (800) illustrated in Figure 8 may include an alloy with a melting point temperature well below the operating temperature of the SOFC system including, but in no way limited to aluminum (Al). While a low melting point alloy composite seal that is liquid form at typical operating temperatures may better reduce the thermal stresses caused by thermal expansion and contraction of the SOFC housings, their structural integrity may be so compromised at the typical operating temperatures of the SOFC system that it may be difficult to contain the seal between the SOFC and the inner wall of the SOFC housing.

Figure 8B is an exploded view illustrating the internal components of the alternative low melting point alloy,composite seal (800). As illustrated in Figure 8B, a binder material such as fine wettable fibers (810) may be added to the low melting point alloy composite seal (800) in order to increase the low melting point alloy composite seal's adhesion to the surrounding components while maintaining its favorable stress absorption characteristics. This configuration allows the low melting point alloy composite seals to be made out of less expensive materials while maintaining their favorable stress absorption characteristics. Moreover, the pressure difference provided across the seal may be varied, if needed, by varying the quantity and characteristics of the fine wettable fibers (810) that are included in the low melting point alloy seal (800). The surface tension of the low melting point composite seal (800) may also be affected by including silica or other fibers in the low melting point alloy composite seal.

Although exemplary embodiments have been described above, numerous modifications and/or additions to the above-described embodiments would be readily apparent to one skilled in the art. By way of example, but not limitation, the various components of the exemplary SOFC stacks described above may be interchanged. It is intended that the scope of the present cartridge extend to all such modifications and/or additions.

In conclusion, the present low melting point composite seal, in its various embodiments, simultaneously prevents the leakage of fuel while reducing the effects of thermal and redox expansions and contractions. Specifically, the present low melting point composite seal provides a structurally yieldable alloy composite that forms a seal between the fuel passages and other components in a SOFC housing. As a result, the present low melting point composite seal is able to provide increased seal durability and increased stress absorption throughout the thermal cycle of a SOFC system as compared to traditional SOFC seals. The present low melting point composite seal also reduces the cost of SOFC housings by facilitating the use of stainless steels and other low cost alloys.

The preceding description has been presented only to illustrate and describe exemplary embodiments. It is not intended to be exhaustive or to limit the exemplary embodiments to any precise form disclosed. Many modifications and variations are possible in light of the above teaching. It is intended that the scope be defined by the following claims.

## Claims

1. A seal (360,760) for a fuel cell comprising:
an alloy configured to absorb thermal and redox stresses transferred to said fuel cell by becoming structurally yieldable at operating temperatures of said fuel cell.

2. The seal (360,760) of claim 1, wherein said fuel cell comprises a sold oxide fuel cell (SOFC).

3. The seal (360,760) of claim 2, wherein said alloy has a melting point temperature slightly above an operating temperature of said SOFC.

4. The seal (360) of any preceding claim, wherein said alloy comprises a silver alloy.

5. The seal (360,760) of any preceding claim, wherein said seal (360,760) is configured to act as an electrical interconnect between SOFC housings (100) in a fuel stack configuration.

6. The seal (360,760) of any preceding claim, wherein said seal (360,760) further comprises wettable fibers (810).

7. A fuel cell comprising:
a housing (100);
a fuel cell disposed within said housing (100); and
a composite seal (360,760) disposed between said housing (100) and said fuel cell;
wherein said composite seal (360,760) is configured to absorb thermal stresses caused by thermal expansion and thermal contraction of said housing (100) by becoming structurally yieldable at operating temperatures of said fuel cell.

8. An electronic device comprising:
an electrochemical cell providing power to an electrical power consuming apparatus (400);
wherein said electrochemical cell comprises a fuel cell including a housing (100), a fuel cell disposed within said housing (100), and a composite seal (360,760) that becomes structurally yieldable at the operating temperatures of said fuel cell disposed between said housing (100) and said fuel cell, wherein said composite seal (360,760) is configured to absorb thermal stresses caused by thermal expansion and thermal contraction of said housing (100) when said composite seal (360,760) becomes structurally yieldable.

9. A method of reducing the transfer of thermal stresses to a fuel cell comprising:
disposing a composite seal (360,760) between said fuel cell and a fuel cell housing (100);
wherein said composite seal (360,760) becomes structurally yieldable at the operating temperatures of said fuel cell such that said composite seal (360,760) absorbs said transfer of thermal stresses from said fuel cell housing (100).

10. A method of manufacturing a fuel cartridge comprising:
forming a first housing (100);
disposing a composite seal (360,760) in said housing (100); and
seating a fuel cell in said composite seal (360,760);
wherein said composite seal (360,760) becomes structurally yieldable at the operating temperatures of said fuel cartridge.
